# EUROPÄISCHE PATENTANMELDUNG

(11) **EP 3 163 699 A1**
(43) Veröffentlichungstag der Anmeldung: **03.05.2017**
(21) Anmeldenummer: 16183022.9
(22) Anmeldetag: 05.08.2016
(51) Int. Cl.: H02G 3/10, H02B 1/42, H02G 3/16, H02G 3/14

(54) **KABELKANALABSCHNITT, KABELKANAL UND KABELKANALSYSTEM**

(30) Priorität: 28.10.2015 DE 102015013861
(71) Anmelder: gabo Systemtechnik GmbH, 94559 Niederwinkling (DE)
(72) Erfinder: Geiger, Alexander, 94559 Niederwinkling (DE); Faltermeier, Josef, 93179 Brennberg (DE); Karl, Markus, 94327 Bogen (DE); Lederer, Roland, 94374 Schwarzach (DE)
(74) Vertreter: Schmid, Nils T.F.

(57) **Zusammenfassung**

Kabelkanalabschnitt, wie Kabelkanal oder Kabelkanalende, insbesondere der vierten und/oder fünften Netzebene, zum Verlegen und Verblenden von Leitungen, wie elektrische und/oder optische Leitungen, und zur Aufputz-Montage, umfassend ein Kanalgehäuse insbesondere aus Kunststoff oder Aluminium, wobei das Kanalgehäuse wenigstens einen in Verlegrichtung offenen Zugang zum Anschluss an einen Kabelkanal aufweist und eine in dem Kanalgehäuse untergebrachte Elektronikkomponente zum Verarbeiten von über eine Leitung empfangenen Daten und/oder Signale, wie einen Medienkonverter und/oder einen WLAN Access Point.

## Beschreibung

Die Erfindung betrifft insbesondere einen überirdischen Kabelkanalabschnitt vorzugsweise für die vierte und/oder fünfte Netzebene zur Aufputz-Montage, einen Kabelkanal zur Aufputz-Montage und ein Kabelkanalsystem zur Aufputz-Montage. In der vierten und fünften Netzebene werden Leitungen ab der Gebäudewand im Inneren des Gebäudes verlegt, wobei in der vierten Netzebene Leitungen beispielsweise über Treppenhäuser hin zu den Wohnungen beispielsweise eines Mehrfamilienhauses verlegt sind. In der fünften Netzwerkebene sind Leitungen innerhalb von Wohneinheiten, wie Wohnhäusern oder Wohngebäuden, verlegt.

Ein Kabelkanal ist ein sich lang erstreckendes Hohlprofil, in dem Leitungen und Kabel verlegt sind. Der Kabelkanal kann als ein Hohlstrangprofil angesehen werden, der eine sich längs erstreckende Gehäusestruktur aus ein und demselben Material, wie Kunststoff oder Aluminium, gebildet ist, das insbesondere an beiden Längsenden offen und verschließbar ist.

Es ist bekannt, Kabelkanäle für die Elektroinstallation an Wände, Boden oder Decken von Gebäude-Aufputz anzubringen. Der Aufputz-Kabelkanal bietet Schutz vor äußeren Einflüssen und gibt Kabeln und Leitungen innerhalb der Kabelkanäle Stabilität. Durch die in dem Kabelkanal aufgeräumten optischen oder elektrischen Leitungen werden lose angebrachte Kabel vermieden, welche einen räumlichen Gesamteindruck stark beeinträchtigen können. Der Kabelkanal soll optisch in den Hintergrund treten und somit eine Längenaußenabmessung aufweisen.

Der Kabelkanal soll insbesondere aufgrund der Verwendung von Kunststoff eine vollständige Isolierung der in dem Kabelkanal geführten Leitungen von der Gebäudewandung bereitstellen, um einen direkten Kontakt der Außenseitenleitungen mit der Gebäudewand zu vermeiden. Es soll eine im Verlegeverlauf der Leitungen gleichmäßige und reaktionsarme Umgebung für die Leitungen bereitgestellt werden, weswegen der Kabelkanal eine bezüglich der zur Längsrichtung/Verlegerichtung des Kabelkanals definierten Umfangsrichtung vollumschlossene Gehäusestruktur bildet.

Kabelkanäle sind in unterschiedlichen Abmessungen 60 mm x 40 mm oder 50 mm x 50 mm oder 60 mm x 150 mm oder 60 mm x 250 mm oder dergleichen konstruiert, um eine Mehrzahl von Kabeln und/oder Leitungen verlegen zu können. Kabelkanäle sind an räumliche Gegebenheiten, wie Wandvorsprünge, Ecken, Türrahmen, etc., formangepasst. Um auch für wenig geschulte Bedienpersonen eine einfache Montage an den Gebäudewänden zu gewährleisten, ist ein dem Wandbereich zugeordnetes sogenanntes Unterteil eines mehrteiligen Gehäuses mit einer Lochung versehen, über welche der Kabelkanal an der Gebäudewand angebracht werden kann.

Es ist bekannt, über den Kabelkanal, der zum Aufputz installiert ist, Leitungen geschützt von oder zu Überputz- oder Unterputzsteckdosen oder anderen elektrischen Endgeräten, Datenverteilungseinrichtungen, wie WLAN-Router, die Aufputz-installiert sind, zu verlegen. Derartige Überputzkonstruktionen sind insbesondere dann notwendig, wenn Altbausubstanzen mit zusätzlichen elektrischen Leitungen und Datenübertragungsleitungen zu versehen sind, und die Gebäudestruktur unversehrt bleiben muss. Allerdings sind die elektronischen Geräte auch funktionsbedingt sehr auffällig, was den optischen Gesamteindruck insbesondere bei Altbausubstanzen, allerdings auch bei Neubausubstanzen beeinträchtigt.

Es ist Aufgabe der Erfindung, die Nachteile des Stands der Technik zu überwinden, insbesondere einen überirdischen Aufputz-Kabelkanalabschnitt dahingehend zu verbessern, dass unter Beibehaltung einer zurückhaltenden Optik bei der Aufputzrealisierung die Funktionalität erweitert ist.

Diese Aufgabe wird durch die Merkmale von Anspruch 1 gelöst. Danach ist ein überirdischer Kabelkanalabschnitt vorgesehen, der insbesondere an den Wänden, Decken oder Boden eines Gebäudes Aufputz zu installieren ist, wobei vorzugsweise der Kabelkanalabschnitt in der 4. und/oder 5. Netzebene installiert wird. Dafür hat vorzugsweise der Aufputz-Kabelkanalabschnitt eine bezüglich der Verlegerichtung innerhalb des Kabelkanalabschnitts definierten Umfangsrichtung geschlossene Hohlstruktur, zu deren Innenraum der Zugang entweder an den lotrecht zur Verlegerichtung liegenden, offenen Stirnseiten erreicht wird oder durch eine mehrteilige Kanalgehäusestruktur beispielsweise mit Basis und Deckel, wobei der Deckel von der Basis demontier- oder aufklappbar ist. Im geschlossenen Zustand bildet der Kabelkanalabschnitt eine in Umfangsrichtung umlaufende geschlossene Struktur, so dass ein Kontakt zwischen der Oberfläche der Gebäudewand und den in dem Kabelabschnitt zu verlegenden Leitungen ausgeschlossen werden kann. Vorzugsweise hat der erfindungsgemäße Kabelkanalabschnitt außer den offenen Stirnseiten oder wenigstens einer offenen Stirnseite, falls die gegenüberliegende Stirnseite blindgeschlossen ist, keinen weiteren Eingang für elektrische Leitungen, so dass die innerhalb des Kabelkanals liegenden elektrischen Leitungen sich ausschließlich lotrecht zur Verlegerichtung liegenden Stirnseite erfolgt. Der Kabelkanalabschnitt kann auch den gesamten Kabelkanal bilden oder einen Teil davon oder ein abschnittsweises Kabelkanalende, einen abschnittsweisen Kabelkanalübergang darstellen, sodass ein stirnseitiger Zugang und/oder Ausgang von dem Innenraum des Kabelkanals bestehen kann. Der Kabelkanalabschnitt dient dazu, Leitungen, wie elektrische und/oder optische Leitungen, sicher zu verlegen, von der Gebäudewand zu isolieren/trennen und bei Aufputz zu verblenden. Der überirdische Kabelkanalabschnitt hat ein Kanalgehäuse insbesondere aus Kunststoff oder Aluminium. Vorzugsweise ist das Kanalgehäuse ausschließlich aus einem Werkstoff, wie Kunststoff oder Aluminium, gefertigt, insbesondere gespritzt. Dabei kann vorgesehen sein, dass das Kanalgehäuse zweiteilig oder mehrteilig oder aus einem Teil gefertigt ist. Bei einer Ausführung mit einem Basisteil und einem Deckel kann vorgesehen sein, dass der Deckel einstückig mit dem Basisteil realisiert ist und beispielsweise mit einem Filmscharnier gekoppelt ist, um eine einteilige Fertigung zu realisieren. Zum Verschließen des Deckels kann ein Einrastmechanismus vorgesehen sein, wobei auch andere Befestigungsarten in Betracht gezogen werden können. Das Kanalgehäuse ist insbesondere dazu ausgelegt, direkt an die Gebäudewand befestigt zu werden, wobei handelsübliche Befestigungselemente, wie Schrauben, Klemmen, Schellen, etc., herangezogen werden können. Das Kanalgehäuse hat wenigstens einen in Verlegerichtung offenen Zugang zum Anschluss an einen weiteren Kabelkanal. Der kanalgemäße Anschluss wird dadurch realisiert, dass das offene Zugangsende des Kanalgehäuses in ein entsprechend geformtes Anschlussende des anzuschließenden Kabelkanals einsteckbar oder auf andere Weise formschlüssig verbindbar ist. Nach dem Anschluss des Kabelkanals an dem erfindungsgemäßen Kabelkanalabschnitt geht der eine kanalförmige Innenraum des Kabelkanalabschnitts in den anderen Kanalinnenraum des angeschlossenen Kabelkanals oder Kabelkanalabschnitts ineinander über, um einen vollständig umschlossenen Gesamtkanalinnenraum zur Durchlegung der Leitungen zu bilden. Vorzugsweise hat der überirdische Kabelkanalabschnitt gemäß der Erfindung zwei diametral gegenüberliegende oder in einem bestimmten Winkel zueinander liegende offene Stirnzugänge, an die jeweils eine Kabelkanalverlängerung angeschlossen werden kann. Insbesondere kann der überirdische Kabelkanalabschnitt durch einen Kabelkanaleckabschnitt oder eine Kabelkanalüberbrückung realisiert sein, an dem über das jeweils offene Zugangsende weitere Kabelkanäle oder ein Kabelkanalabschluss angeschlossen werden können. Erfindungsgemäß umfasst der Kabelkanalabschnitt eine in dem Kanalgehäuse insbesondere vollständig untergebrachte Elektronikkomponente, die dazu ausgelegt ist, Daten und/oder Signale, die die Elektronikkomponente insbesondere ausschließlich über die in dem Kabelkanalabschnitt und den daran angeschlossenen Kabelkanal verlegten Leitungen erreichen, zu empfangen und zu verarbeiten. Die Elektronikkomponente kann beispielsweise als Medienkonverter und/oder als WLAN-Access-Point realisiert sein. Es können eine einzige Elektronikkomponente oder mehrere Elektronikkomponenten als Funktionseinheit oder Funktionsgruppe innerhalb des Kabelkanals untergebracht sein. Die vollständige Unterbringung der Elektronikkomponente in dem Kabelkanalabschnitt bedeutet, dass das Kanalgehäuse in Umfangsrichtung die Elektronikkomponente vollständig umschließt. Über die seitlichen Kanalstirnzugänge erreichen die in dem Kabelkanalabschnitt verlegten Leitungen die Elektronikkomponente. Weitere Strukturanschlüsse, die in dem Kabelkanalgehäuse eingebracht sind, um Energie und/oder Daten für die Elektronikkomponenten zu erhalten, sind vorzugsweise gemäß der Erfindung nicht vorgesehen. Allerdings kann das Kabelkanalgehäuse zusätzliche Öffnungen für die Kommunikation von der Elektronikkomponente mit externen Geräten aufweisen.

Erfindungsgemäß wird der überirdische Kabelkanalabschnitt nicht ausschließlich dazu verwendet, Leitungen zum Übertragen von Signalen, elektrische Energie oder dergleichen zu verlegen, sondern zusätzlich durch eine elektronische Funktionskomponente, die Funktionsfähigkeit des Kabelkanals zu erweitern. Es ist möglich, optisch wenig ansprechende Funktionsgeräte, wie WLAN-Router, etc., unauffällig zu verbauen. Der meist nicht vollständig genutzte Raum des Kabelkanals wird erfindungsgemäß dazu genutzt, beispielsweise dazu benachbarte elektronische Komponenten zu verstauen.

Die Elektronikkomponente kann beispielsweise durch ein sogenanntes Patchpanel gebildet sein, an das Leitungen angeschlossen und verschaltet werden, die innerhalb des Kabelkanals geführt sind. Auch andere elektrische Komponenten, wie Verteilernetzte, Anschlussdosen für unterschiedliche Anschlusselemente, wie Datenstecker oder Energiestecker, können in dem Kabelkanalabschnitt verstaut sein.

Bei einer bevorzugten Ausführung der Erfindung ist die Elektronikkomponente dazu ausgelegt oder hat entsprechende Elektronikelemente, um ein Lichtwellensignal in ein Internetsignal umzuwandeln. Des Weiteren kann die Elektronikkomponente dazu ausgelegt sein oder ein entsprechendes Elektronikelement aufweisen, das das Internetsignal in ein WLAN-Signal umwandelt, um insbesondere kabellos an die Umgebung insbesondere über eine innerhalb des Kabelkanalgehäuses und über die kabelkanalgeführten Leitungen elektrisch versorgte Antenne zu versenden.

Bei einer bevorzugten Ausführung der Erfindung hat der überirdische Kabelkanalabschnitt gemäß der Erfindung eine Halteeinrichtung zum Befestigen der Elektronikkomponente im Inneren des Kanalgehäuses. Vorzugsweise ist die Elektronikkomponente durch die Halteeinrichtung lösbar, insbesondere austauschbar, von dem Kanalgehäuse demontierbar, an dem Kanalgehäuse befestigt. Bei der lösbaren Befestigung braucht zumindest das Kanalgehäuse, welches einen Teil der Halteeinrichtung bilden kann, nicht zerstört werden, um beispielsweise eine defekte oder ungeeignete Elektronikkomponente auszutauschen. Vorzugsweise ist auch die Elektronikkomponente zerstörungsfrei von dem Kanalgehäuse zu trennen.

Bei einer bevorzugten Ausführung der Erfindung ist die Halteeinrichtung genauso wie das Kanalgehäuse des Kabelkanalabschnitts aus ein und demselben Material, wie Kunststoff oder Aluminium, gefertigt, insbesondere gespritzt. Vorzugsweise ist die Halteeinrichtung als Rastmechanismus ausgebildet, der vorzugsweise mehrere Zähne aufweist. Der erfindungsgemäße Rastmechanismus kann ohne Spezialwerkzeug bedient werden, sodass auch ungeschulte Bedienpersonen einen Austausch der Elektronikkomponente bewerkstelligen können.

Der Rastmechanismus kann beispielsweise mehrere Zähne aufweisen, die zur Befestigung in entsprechende Rastaussparungen eingreifen, wobei die Zähne sowohl an der Elektronikkomponente als auch an dem Kanalgehäuse ausgebildet sein können. Gleiches gilt für die Rastaussparungen.

Bei einer Weiterbildung der Erfindung ist das Kanalgehäuse ein- oder zweiteilig ausgebildet, nämlich durch ein Unterteil und ein Oberteil. Vorzugsweise ist das Unter- und Oberteil schalenförmig ausgebildet, wobei insbesondere die Schalenhälften im Wesentlichen gleich groß sind. Vorzugsweise ist das Oberteil, als Deckel, etwas größer dimensioniert, insbesondere was die von der Wand vorstehende Kanalhöhe angeht. Das Unterteil kann mit einer Einrichtung zum Montieren, insbesondere Aufputz-Montieren, versehen sein, welche beispielsweise durch eine in dem platten- oder schalenförmigen Unterteil ausgebildete Lochung gebildet sein kann, durch die Befestigungsmittel, wie Schrauben, in das Mauerwerk eindringen können. Des Weiteren kann das Unterteil plane oder winklige zum Mauerwerk zuzuwendende Auflageflächen bilden, um sich dem Umgebungsprofil der Wandung, der Decke oder des Bodens anzupassen. Das Unterteil ist aus einem geschlossenen isolierenden Material gebildet.

Das Oberteil ist insbesondere in einem Montagezustand fest mit dem Unterteil verbunden, wobei insbesondere im demontierten Zustand des Oberteils von dem Unterteil ein freier Zugangszugriff auf die an dem Unterteil befestigten Elektronikkomponenten für deren Demontage und/oder Montage zugelassen ist. Erfindungsgemäß hält die Befestigungseinrichtung das Oberteil an dem Unterteil ortsfest in einer vorbestimmten Position fest. Dabei kann die Befestigungseinrichtung eine Gleitlagerung zum Verschieben oder Aufschieben des Oberteils in Verlegelängsrichtung aufweisen, wobei insbesondere die Gleitlagerung einen Schiebestopp aufweist, an dem das Oberteil relativ zum Unterteil festgelegt ist und die oben genannte Einbauposition einnimmt.

Bei einer Weiterbildung der Erfindung hat das Kanalgehäuse eine Aufbautiefe, also eine von der Gebäudewand vorspringende Maximalhöhe, die größer oder gleich der des daran anschließenden Kabelkanals ist. Vorzugsweise ist das Kanalgehäuse des Kabelkanalabschnitts bezüglich der Aufbautiefe größer als der daran anschließende Kabelkanal, um mehr Raum zu bieten, die entsprechenden Elektronikkomponenten unterzubringen. Aus optischen Gründen ist es bevorzugt, dass der Kabelkanalabschnitt und der anschließende Kabelkanal im Wesentlichen die gleiche Kontur aufweisen, um einen unauffälligen Aufputz-Kabelkanalverlauf diesseits und jenseits des erfindungsgemäßen Kabelkanalabschnitts zu gestalten. Vorzugsweise hat das Kanalgehäuse einen in Verlegerichtung im Wesentlichen gleich bleibenden Kanalinnenquerschnitt, der insbesondere rechteckig, dreieckig, halbrund, insbesondere halbzylindrisch, ist.

Bei einer bevorzugten Ausführung der Erfindung schließt an den Kabelkanalabschnitt ein Kabelkanal an, und ein Gehäuseübergang zwischen dem Kabelkanal und dem Kabelkanalabschnitt, insbesondere ein außenseitiger Kanalgehäuseübergang ist konturenfrei, insbesondere stufenfrei, vorzugsweise unter Ausbildung eines Kanalwandanschlussübergangs gebildet, an dem vorzugsweise ein kontinuierlicher, glatter Übergang realisiert ist. Um einen auch im Wesentlichen abgedichteten Kanalinnenraum zu bilden, kann an dem Kanalwandanschlussübergang eine Dichtung, wie eine Labyrinthdichtung oder eine Einsatzdichtung insbesondere aus Elastomermaterial angeordnet sein.

Bei einer bevorzugten Ausführung der Erfindung ist in dem Kanalgehäuse eine Elektronikplatine zum Tragen von Elektronikelementen der Elektronikkomponente angeordnet. Ein Beispiel für eine Elektronikkomponente kann ein Patchpanel sein oder wenigstens ein Leitungsanschluss. Vorzugsweise ist die Elektronikplatine an deren Längsseite mit mehreren Rastnasen oder -zähnen versehen, um in Aussparungen, die an dem Kanalgehäuse ausgebildet sind, rastend eingreifen zu können.

Bei einer bevorzugten Ausführung der Erfindung umfasst die Elektronikkomponente einen elektrischen Leitungsanschluss, insbesondere ein elektrisches Leitungsanschlusspaar oder mehrere Leitungsanschlüsse, und einen POF-Leitungsanschluss, insbesondere ein POF-Leitungsanschlusspaar oder mehrere POF-Leitungsanschlüsse, an dem eine über den Kabelkanal ankommende POF-Leitung anschließbar ist.

Bei einer Weiterbildung der Erfindung hat die Elektronikkomponente wenigstens eine Steckbuchse, insbesondere eine Lan- und/oder eine CAT-Buchse, zum Anschließen der Elektronikkomponente an eine externe Leitung, die mit einem externen Gerät verbunden ist. Die externe Leitung wird über einen entsprechenden Stecker an der Steckbuchse angeschlossen, die unmittelbar an einem in dem Oberteil des Kanalgehäuses ausgebildeten Fenster ausgebildet ist. Um einen mechanischen Zugang zu den Steckbuchsen zu schaffen, kann das Oberteil wenigstens ein Fenster, oder mehrere Fenster aufweisen.

Bei einer bevorzugten Ausführung der Erfindung hat die Elektronikkomponente eine WLAN-Antenne, die im Kanalgehäuse untergebracht ist und/oder an einer dem Unterteil zugewandten Seite einer Elektronikplatine realisiert ist.

Des Weiteren betrifft die Erfindung einen Kabelkanal mit einem erfindungsgemäßen Kabelkanalabschnitt. Der Kabelkanalabschnitt hat einen Längshohlraum, der in den des Kabelkanals nach Anschluss übergeht, um einen sich längs erstreckenden Verlegeraum zu bilden. Auf diese Weise können von dem Innenraum des Kabelkanalabschnitts sämtliche verlegte Leitungen in den Kabelkanal ungehindert einmünden.

Des Weiteren betrifft die Erfindung ein Kabelkanalsystem mit einem Kabelkanalabschnitt mit einem insbesondere erfindungsgemäßen Kabelkanal, der an einer Wand, Boden und/oder Decke eines Gebäudes montiert ist, wobei insbesondere ein erfindungsgemäßer Kabelkanalabschnitt in einer Höhe relativ zur Bodenfläche von 170 cm bis 210 cm, vorzugsweise 180 cm bis 200 cm, angeordnet ist.

Vorzugsweise ist der Querschnitt des erfindungsgemäßen Kabelkanalabschnitts um höchstens das Doppelte, das Dreifache oder das Vierfache des anschließenden Kabelkanals größer. Vorzugsweise ist der Kabelkanalabschnitt mit einem Innenquerschnitt versehen, der kleiner als vorzugsweise 10.000 mm², 5.000 mm², 2.000 mm², 1.000 mm², 900 mm², 800 mm² oder 500 mm² ist. Der Querschnitt des Kabelkanals kann sich in Längsrichtung des Kabelkanals nicht ändern und ist vorzugsweise konstant ausgebildet, wobei die Größe des Querschnitts konstant ist. Selbstverständlich kann sich der frei verfügbare Querschnittsinhalt längs des Kabelkanalabschnitts verändern, wenn beispielsweise in bestimmten axialen Positionen Befestigungsmittel vorgesehen sind, um die entsprechende Elektrokomponente, wie eine Platine, innerhalb des Gehäuses des Kabelkanalabschnitts unterzubringen. In diesem Zusammenhang sei darauf hingewiesen, dass zur Definition des Querschnitts des Kabelkanals auch die Abmessung oder die Umhüllungsebene der Außenseite des Kabelkanals angesehen werden kann, so dass auch die Wandstärke des Kabelkanals zu dem Querschnitt des Kabelkanals, der insbesondere konstant ist, hinzugefügt werden kann und vorzugsweise der Querschnitt des Kabelkanals bis zur Gebäudewand reicht, an der der Kabelkanalabschnitt befestigt ist.

Weitere bevorzugte Ausführungen sind in den Unteransprüchen angegeben.

Weitere Eigenschaften, Merkmale und Vorteile der Erfindung werden durch die folgende Beschreibung bevorzugter Ausführungen der Erfindung deutlich, indem zeigen:
- Figur 1: eine perspektivische Explosionsansicht eines Kabelkanalsystems mit einem erfindungsgemäßen Kabelkanalabschnitt gemäß einer ersten Ausführungsform und einem anzuschließenden Kabelkanal für eine Aufputz-Installation an einer planen Gebäudewand, Gebäudedecke oder Gebäudeboden;
- Figur 2: eine perspektivische Explosionsansicht eines weiteren Kabelkanalsystems zur Montage an einer Gebäudeecke mittels einem erfindungsgemäßen Kabelkanalabschnitt gemäß einer zweiten Ausführungsform und einem anzuschließenden Kabelkanal;
- Figur 3: eine perspektivische Explosionsansicht eines Kabelkanalsystems mit einem erfindungsgemäßen Kabelkanalabschnitt gemäß der ersten Ausführungsform in der Mitte zwischen zweier anschließender Kabelkanäle zum Bilden des Kabelkanalsystems;
- Figur 4: ein Kabelkanalsystem nach Figur 3, wobei das Oberteil des Kanalgehäuses des Kabelkanalabschnitts weggelassen ist; und
- Figur 5: eine perspektivische Unteransicht einer in dem Kabelkanalabschnitt gemäß der zweiten Ausführungsform untergebrachten Elektronikkomponente entsprechend der Ausführungen nach Figur 4.

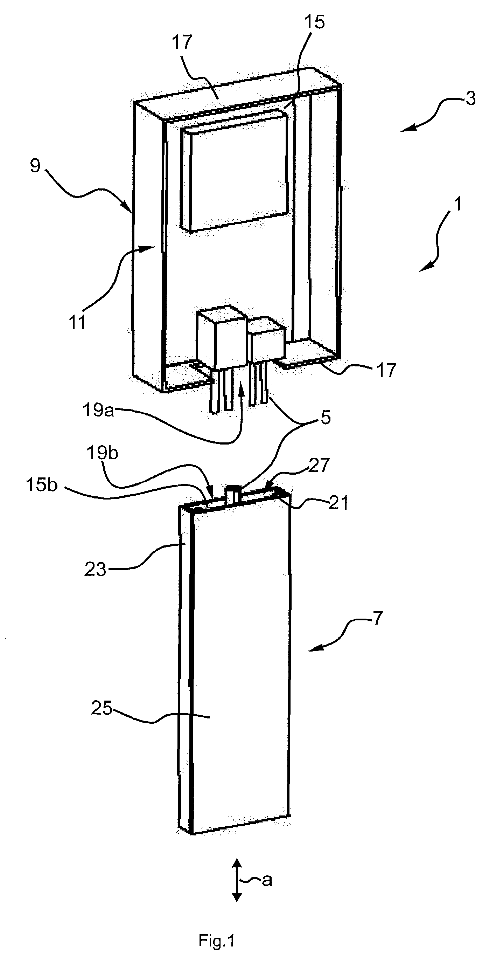

In Figur 1 ist eine erste Ausführungsform des erfindungsgemäßen Kabelkanalsystems 1 zur Aufputz-Montage an einer nicht näher dargestellten Wand oder Decke eines Gebäudes abgebildet. Ein Kabelkanalabschnitt 3 zum Verlegen und Verblenden von Leitungen 5, wie elektrische und/oder optische Leitungen, und zum vollständigen Unterbringen wenigstens einer Elektronikkomponente ist dazu ausgelegt, mit einem Kabelkanalfortsatz 7 verbunden zu werden.

Der Kabelkanalabschnitt 3, der in Figur 1 als Kabelkanalende ausgeführt ist, umfasst ein verschließbares Kanalgehäuse 9, das aus Kunststoff gefertigt ist und ausschließlich aus Basisteil und Deckel, wie einem Unterteil 11 und einem Oberteil 13 (nicht dargestellt) besteht. Das Unterteil 11 ist dabei mit einer Einrichtung zum Montieren (nicht dargestellt), insbesondere Aufputz-Montieren, zur Befestigung an einer Wand oder Decke versehen, welche beispielsweise an einer Auflagefläche 15 angebracht sein kann. Die Auflagefläche 15 des Unterteils 11 des Kabelgehäuses 9 ist durch eine plane Plattenform gebildet, um an einer entsprechenden planen Oberfläche der Wand oder Decke befestigt zu werden. Vorzugsweise sind andere Grundformen der Auflagefläche 15 denkbar, insbesondere kann die Auflagefläche 15 winklig, insbesondere rechtwinklig, ausgebildet sein, um in einer entsprechend ausgebildeten Wandecke fixiert zu werden. Von der Auflagefläche 15 erstrecken sich vier im Wesentlichen rechtwinklig angeordnete, Kanalwände, wobei zwei Stirnkanalwände 17 in Verlegelängsrichtung a angeordnet sind. Zum Anschließen des Kabelkanalabschnitts 3 an wenigstens einen Kabelkanalfortsatz 7 weist zumindest eine Stirnkanalwand 17 wenigstens eine Anschlussöffnung 19a auf, über die der Kabelkanal 7 in den Kabelkanalabschnitt 3 koppelbar, insbesondere einsteckbar, ist, wobei auch andere Anschlussmöglichkeiten denkbar sind.

Bei dem Kabelkanal 7, der zur Gewährleistung eines gleichmäßigen Übergangs zu dem Kabelkanalabschnitt 3 eine rechteckige oder andersartige Grundform sowie eine im Wesentlichen, bezüglich der Verlegelängsrichtung umgebenden Umfangsrichtung, umschließende Kanalwand aufweist, ist zumindest die Stirnkanalwand 21, die der Stirnkanalwand 17, die einen offenen Zugang 19a besitzt, gegenüberliegt, mit einem offenen Zugang 19b versehen, um Kabel zwischen dem Kabelkanal 7 und dem Kabelkanalabschnitt 3 zu verlegen beziehungsweise zu führen. Es ist zu erkennen, dass eine Aufbautiefe, also die von der Gebäudewand vorspringende Maximaltiefe, des Kabelkanals 7 kleiner ist als die des anschließenden Kabelkanalabschnitts 3. Der Kabelkanal weist ferner ein Unterteil 23 und ein fest mit diesem verbindbares Oberteil 25 auf, wobei die Anbringung weiter unten beschrieben wird. Das vorzugsweise aus Kunststoff gespritzte oder Aluminium gefertigte Gehäuse des Kabelkanalabschnitts 3 und/oder des Kabelkanals 7 ist dabei vorzugsweise zweiteilig realisiert, wobei eine einstückige Fertigung ebenfalls denkbar ist, bei der das Oberteil 13, 25 beispielsweise über ein Filmscharnier schwenkbar mit dem Unterteil 11, 23 gekoppelt ist, sodass das Oberteil 13, 25 von einer geschlossenen Position des Kabelkanalabschnitts 3 und/oder des Kabelkanals 7 in eine offene Position, und umgekehrt, verschwenkt werden kann. Dabei ist die offene Position zum einen für die Montage an die Wand oder Decke und zum anderen zum Einlegen der Leitungen 5 und/oder von wenigstens einer Elektronikkomponente 35 vorgesehen. Die geschlossene Position, bei der eine umlaufend vollständig geschlossene Struktur gebildet ist, stellt den montierten Endzustand des Kabelkanals 7 und/oder des Kabelkanalabschnitts 3 Aufputz dar, bei dem ein Zugriff auf die Leitungen 5 und/oder die wenigstens eine Elektronikkomponente 35 verhindert ist.

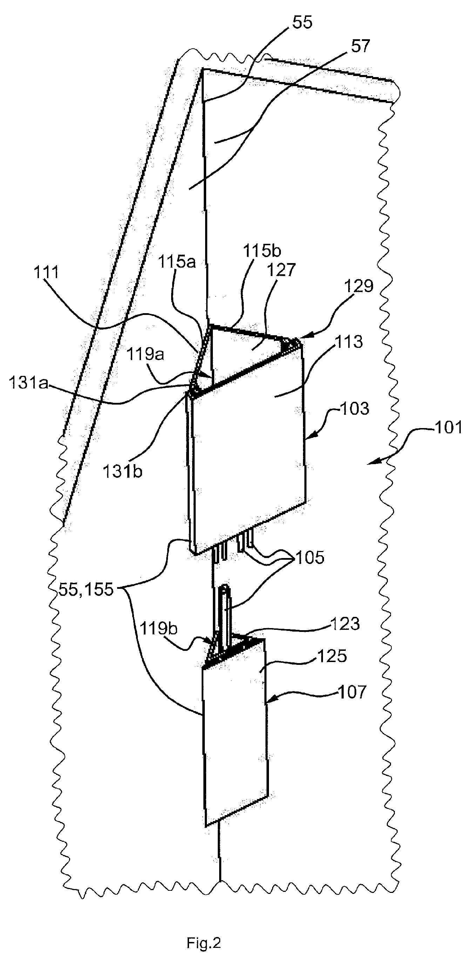

Die in Figur 2 dargestellte zweite Ausführungsform eines Kabelkanalsystems 101, für die die Bezugsziffern entsprechender Bauteile um 100 erhöht wurden, um eine bessere Unterscheidung zwischen den Ausführungsformen zu erhalten, unterscheidet sich von der ersten Ausführungsform dahingehend, dass die Auflageflächen 115a, 115b derart ausgebildet sind, dass der Kabelkanalabschnitt 103 und der Kabelkanal 107 in einer Gebäudeecke 55 zweier Wände 57 fixiert werden können. Dazu sind die Auflageflächen 115a, 115b winklig, insbesondere als zwei zueinander in einem Winkel angeordnete Teilauflageflächen ausgebildet, wobei der Winkel an die entsprechende Kontur der Gebäudeecke 55 angepasst ist, sodass der Kabelkanalabschnitt 103 und der Kabelkanal 107 einen im Wesentlichen dreieckförmigen Querschnitt aufweisen. Ferner ist es vorgesehen, die Auflageflächen 115a, 115b an weitere Gebäudeeckkonturen, wie Rundungen von beispielsweise Säulen, anzupassen.

Das Oberteil 113 des Kanalgehäuses 109 des Kabelkanalabschnitts 103 ist in Figur 2 in einem montierten, geschlossenen Zustand mit dem Unterteil 111 abgebildet, sodass ein Zugriff auf die im Innenraum 127 geführten Kabel verhindert ist. Mithilfe einer Befestigungseinrichtung 129 wird das Oberteil 113 an dem Unterteil 111 ortsfest in einer vorbestimmten Position gehalten, wobei das Oberteil 113 und das Unterteil 111 vorzugsweise rastend ineinandergreifen. Dazu weisen das Unterteil 111 und das Oberteil 113 aufeinander abgestimmte Rastnasen 131a, 131b auf, die zum einen dazu ausgebildet sind, ein Verschieben oder Aufschieben des Oberteils 113 in Verlegerichtung a zu ermöglichen, wobei insbesondere eine Gleitlagerung mit einem Schiebestopp (nicht dargestellt) vorgesehen sein kann, und zum anderen derart elastisch verformbar sind, dass das Oberteil 113 alternativ auf das Unterteil 111 gedrückt, wie geclipst werden kann. Quer zur Verlegerichtung a ist das Oberteil 113 größer dimensioniert als das Unterteil 111, sodass die Rastnasen 131a des Oberteils 113 die Rastnasen 131b des Unterteils 111 umgreifen. Eine analoge Befestigung von Oberteil 25, 125 und Unterteil 23, 123 des Kabelkanals 107 ist erfindungsgemäß vorgesehen.

Die Oberteile 13, 113, 25, 125 sind als im Wesentlichen ebene Deckel ausgebildet, deren Materialstärke deutlich kleiner als die Erstreckung in Verlegerichtung a und/oder in einer Richtung lotrecht zur Verlegerichtung a ist. An den Außenwänden, d.h. zur Verlegerichtung a parallelen Kanalwänden, weisen die Oberteile 13, 113, 25, 125 die oben beschriebene Befestigungseinrichtung 129 auf. Die Oberteile 13, 113, 25, 125 sind dabei derart dimensioniert, dass sie zum einen die Unterteile 11, 111,21, 121 vollständig abschließen und damit einen wenigstens in Umfangsrichtung geschlossenen Innenraum 127 zwischen Oberteil und Unterteil bilden können und/oder zum anderen einen, zwei, drei oder vier Linien- oder Flächenkontaktabschnitte 55, 155 mit den angrenzenden Wand- und/oder Deckenflächen bilden, sodass die Wand beziehungsweise Decke in das Oberteil 13, 113, 25, 125 übergeht, um den optischen Gesamteindruck des Raums nicht zu stark zu beeinträchtigen. Im Falle einer Aneinanderreihung von wenigstens zwei Kabelkanälen 7, 107 und/oder Kabelkanalabschnitten 3, 103 ist ein geschlossener Gesamtkanalrinnenraum gebildet. Ein Gehäuseübergang zwischen einem Kabelkanal und einem Kabelkanalabschnitt und/oder einem weiteren Kabelkanal ist insbesondere außenseitig konturenfrei, insbesondere stufenfrei ausgebildet.

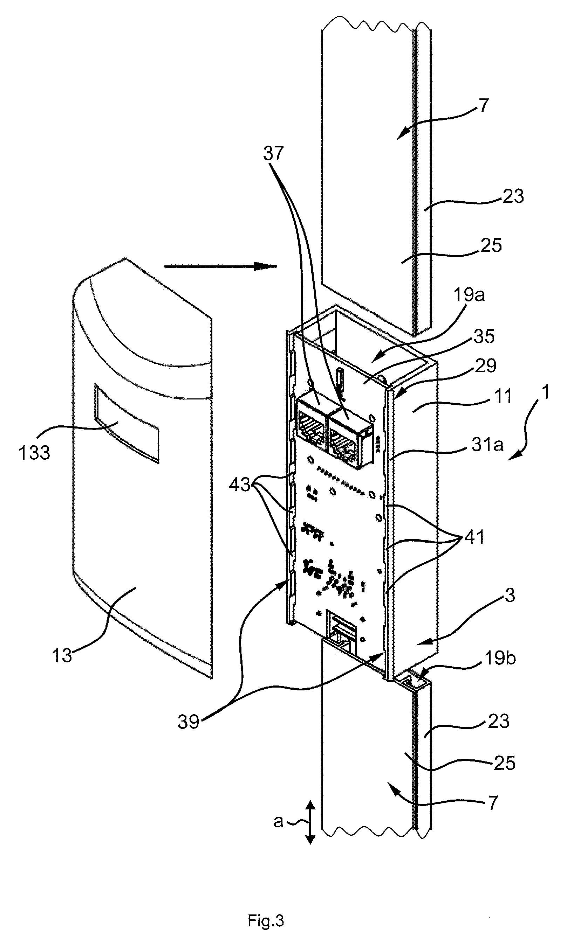

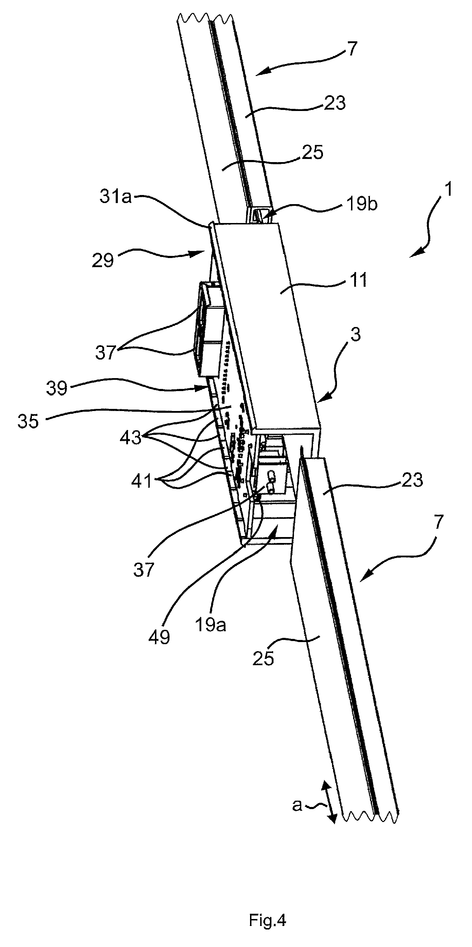

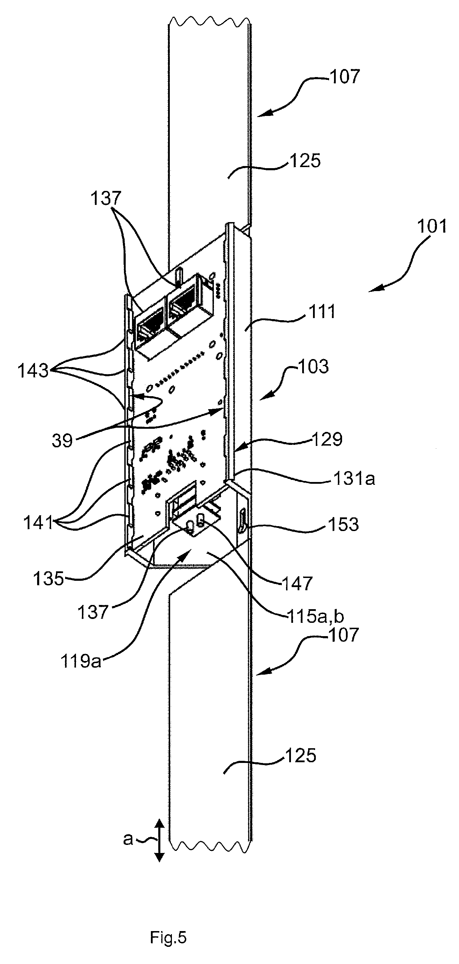

Im Folgenden wird auf die Figuren 3 bis 5 Bezug genommen, wobei sich die Figuren 3 und 4 auf das Kabelkanalsystem 1 gemäß der ersten Ausführungsform und Figur 5 auf die zweite Ausführungsform beziehen.

Dargestellt ist jeweils ein Kabelkanalsystem 1, 101, das einen Kabelkanalabschnitt 3, 103 inmitten zweier Kabelkanäle 7, 107 umfasst. Somit weist der Kabelkanalabschnitt 3, 103 an beiden Stirnkanalwänden 17, 117 offene Zugänge zum Anschließen jeweils eines Kabelkanals 7, 107 auf. In Figur 3 ist das Oberteil 13 des Kabelkanalabschnitts 3 abgebildet, wobei es sich in einer demontierten Position, d.h. nicht im Eingriff mit dem Unterteil 11 befindet und eine Materialaussparung, wie ein Fenster 33 für Datenanschlüsse, wie Verbindungs- und/oder Stromkabel besitzt.

Eine Elektronikkomponente 35, 135, die in dem Kabelkanalabschnitt 3, 103 untergebracht ist, ist dazu ausgelegt, Daten und/oder Signale, die über die in dem Kabelkanalabschnitt 3, 103 bzw. dem Kabelkanal 7, 107 verlegten Leitungen 5, 105 übertragen werden, zu empfangen und zu verarbeiten. Dabei ist die Elektronikkomponente 35, 135 derart in Bezug auf den Kabelkanalabschnitt 3, 103 dimensioniert, dass diese zum einen insbesondere vollständig im Kanalinnenraum aufgenommen ist und zum anderen noch Platz für die Verlegung beziehungsweise Führung von Leitungen 5, 105 zulässt. Vorzugsweise ist die Elektronikkomponente 35, 135 in einem oberen, der Wand oder Decke entfernten Bereich des Kabelkanalabschnitts 3, 103 angeordnet, sodass Leitungen 5, 105 unterhalb der Elektronikkomponente 35, 135 in einem unteren Bereich des Kabelkanalabschnitts 3, 103 nahe der Wand oder Decke an der Elektronikkomponente 35, 135 vorbei oder zu dieser geführt werden können.

Die Elektronikkomponente 35, 135 kann beispielsweise als Platine ausgeführt sein und darauf angeordnete Elektronikelemente 37, 137 aufweisen, die zum Umwandeln und Verarbeiten von Signalen und/oder Daten oder zum Anschließen von weiteren elektronischen Komponenten ausgebildet sein können. Durch die Unterbringung der Elektronikkomponente 35, 135 und der Elektronikelemente 37, 137 ist es möglich diese verdeckt zu halten und vor äußeren Einflüssen zu schützen. Des Weiteren bewirkt die Aufputz-Montage eine schnelle Installation der Kabelkanäle 7, 107 und zugehöriger Elektronikkomponenten 35, 135 an einer Wand oder Decke, ohne dass diese beschädigt werden muss. Dadurch dienen die Kabelkanalabschnitte 3, 103 nicht mehr ausschließlich zum Verdecken von Leitungen, sondern zusätzlich zum Aufnehmen von elektronischen Funktionskomponenten 35, 135, wodurch eine Funktionserweiterung bekannter Kabelkanäle und Kabelkanalabschnitte erreicht ist.

Eine Halteeinrichtung 39, 139 ist zum Befestigen der Elektronikkomponente 35,135 an dem Kanalgehäuse 9, 109 vorgesehen, wobei die Befestigung vorzugsweise lösbar, insbesondere austauschbar und/oder von dem Kabelgehäuse 9, 109 demontierbar ist. Die Halteeinrichtung 39, 139 ist als Rastmechanismus ausgebildet, der Zähne 41, 141 und entsprechend ausgeformte Rastaussparungen 43, 143 aufweist, wobei die Zähne 41, 141 in die entsprechenden Rastaussparungen 43, 143 eingreifen, so dass der Rastmechanismus auch ohne Spezialwerkzeug bedient und die Elektronikkomponente zerstörungsfrei demontiert werden kann. Dabei sind sowohl die Zähne 41, 141 als auch die Rastaussparungen 43, 143 an jedem der Elektronikkomponente 35, 135 und dem Kanalgehäuse 9, 109 realisiert, wobei jeweils ein Paar aus Zahn und Rastaussparung derart aufeinander abgestimmt ist, dass eine Demontage zerstörungsfrei möglich ist. Weitere formschlüssige Verbindungen zum Montieren und zerstörungsfreien Demontieren können ebenfalls verwendet werden.

In Figur 5 sind verschiedene Elektronikelemente abgebildet, wobei zwei Datenverbindungsanschlüsse 45, 145 zur Verbindung mit einem Endgerät, ein Lichtwellenleiter-Anschluss 47, 147 als Datenverbindung sowie ein Kupferkabel-Anschluss 49, 149 zur Stromversorgung vorgesehen sind. Weitere Anschlussmöglichkeiten und/oder eine unterschiedliche Anzahl von Anschlüssen sind ebenfalls in der vorliegenden Erfindung enthalten.

Die Anbringung des Unterteils 11, 111 des Kanalgehäuses 9, 109 an einer Wand oder Decke erfolgt beispielsweise über eine Bohrung 53, 153, die in wenigstens einer der Auflageflächen 15, 15a, 15b, 115a, 115b angebracht ist, so dass das Unterteil 11, 111 mittels eines Befestigungselements, wie eine Schraube, an der Wand oder Decke fixiert werden kann. Alternativ weist das Unterteil 11, 111 keine Bohrung auf und die Befestigung an der Wand oder der Decke erfolgt durch Kleben oder über eine zusätzliche Schelle. Durch die zweiteilige Ausbildung des Gehäuses, beziehungsweise durch das Verschwenken des Oberteils 13, 113, 23, 123 in die offene Position, kann somit zunächst das Unterteil 11, 111 an einer bestimmten Position an der Wand befestigt werden, anschließend die Leitungen 5, 105 und/oder die Elektronikkomponente 35, 135 mit den zugehörigen Elektronikelemente 37, 137 in den Kabelkanalabschnitt 3, 103 eingelegt werden und schließlich das Oberteil 13, 113 mittels der Befestigungseinrichtung 129 auf das Unterteil 11, 111 aufgeschoben oder aufgeclipst, beziehungsweise in die geschlossene Position verschwenkt, werden.

Um die Montage des Kabelkanalabschnitts 103 beziehungsweise des Kabelkanals 107 der zweiten Ausführungsform zu erleichtern, kann das Unterteil 111 drei anstatt zwei Auflageteilflächen 115a, 115b umfassen, wobei zwei gegenüberliegende Auflageteilflächen 115a, 115b winkelig entsprechend dem Winkel der angrenzenden Wand oder Decke ausgebildet sind, und die dritte mit den beiden ersten Auflageteilflächen verbundene Auflageteilfläche plan und im Wesentlichen parallel zum dem Oberteil 113 ausgerichtet ist. Vorzugsweise ist die Bohrung 53, 153 in der dritten Auflageteilfläche angebracht, um eine bessere Zugänglichkeit der Schraube mit einem Schrauber zu gewährleisten.

Die in der Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101: Kabelkanalsystem
- 3, 103: Kabelkanalabschnitt
- 5, 105: Leitung
- 7, 107: Kabelkanal
- 9, 109: Kanalgehäuse
- 11, 111: Kabelkanalabschnittunterteil
- 13, 113: Kabelkanalabschnittoberteil
- 15a, 15b, 115a, 115b: Auflagefläche
- 17,117: Stirnwand
- 19a, 19b: offener Zugang
- 21, 121: Stirnwand
- 23, 123: Kabelkanalunterteil
- 25, 125: Kabelkanaloberteil
- 27, 127: Innenraum
- 29, 129: Befestigungseinrichtung
- 31a, 31b, 131a, 131b: Rastnase
- 33, 133: Fenster
- 35, 135: Elektronikkomponente
- 37, 137: Elektronikelemente
- 39, 139: Halteeinrichtung
- 41, 141: Rastzähne
- 43, 143: Rastaussparung
- 45, 145: Datenverbindungs-Anschluss
- 47, 147: Lichtwellenleiter-Anschluss
- 49, 149: Kupferkabel-Anschluss
- 53, 153: Bohrung
- 55: Gebäudeecke
- 57: Wand
- a: Verlegerichtung

## Patentansprüche

1. Kabelkanalabschnitt (3, 103), wie Kabelkanal oder Kabelkanalende, insbesondere für die vierte und/oder fünfte Netzebene, zum Verlegen und Verblenden von Leitungen (5, 105), wie elektrische und/oder optische Leitungen, und zur Aufputz-Montage, umfassend:
- ein Kanalgehäuse (9, 109) insbesondere aus Kunststoff oder Aluminium, wobei das Kanalgehäuse (9, 109) wenigstens einen in Verlegerichtung (a) offenen Zugang (19a, 19b) zum Anschluss an einen Kabelkanal (7, 107) aufweist;
- eine in dem Kanalgehäuse (9, 109) untergebrachte Elektronikkomponente (35, 135) zum Verarbeiten von über eine Leitung (5, 105) empfangenen Daten und/oder Signale, wie einen Medienkonverter und/oder einen WLAN Access Point.

2. Kabelkanalabschnitt (3, 103) nach Anspruch 1, bei dem die Elektronikkomponente (35, 135) dazu ausgelegt ist, ein Lichtwellensignal in ein Ethernetsignal umzuwandeln und insbesondere das Ethernetsignal in ein WLAN-Signal umzuwandeln, um insbesondere Daten kabellos an die Umgebung insbesondere über eine Antenne zu versenden.

3. Kabelkanalabschnitt (3, 103) nach Anspruch 1 oder 2, mit einer Halteeinrichtung (39, 139) zum Befestigen der Elektronikkomponente (35, 135) in dem Kanalgehäuse (9, 109), wobei insbesondere die Elektronikkomponente (35, 135) durch die Halteeinrichtung (39, 139) lösbar, insbesondere austauschbar, von dem Kanalgehäuse (9, 109) demontierbar, an dem Kanalgehäuse (9, 109) befestigt ist, wobei insbesondere die Halteeinrichtung (39, 139) als Rastmechanismus ausgebildet ist, der vorzugsweise mehrere Zähne (41, 141) aufweist, die in entsprechende Rastaussparrungen (43, 143) eingreifen, um die Elektronikkomponente (35, 135) an dem Kanalgehäuse (9, 109) zu fixieren.

4. Kabelkanalabschnitt (3, 103) nach einem der vorstehenden Ansprüche, bei dem das Kanalgehäuse (9, 109) ein Unterteil (11, 111), das mit einer Einrichtung zum Montieren, insbesondere Aufputz-Montieren, versehen ist und/oder eine plane oder winkelige Auflagefläche (15a, 115a) bildet, und ein mit dem Unterteil (11, 111) fest verbindbares Oberteil (13, 113) aufweist, wobei insbesondere im demontierten Zustand des Oberteils (13, 113) von dem Unterteil (11, 111) ein freier Zugriff auf die Elektronikkomponente (35, 135) für dessen Montage und/oder Demontage zugelassen ist, wobei eine Befestigungseinrichtung (129) das Oberteil (13, 113) an dem Unterteil (11, 111) ortsfest in einer vorbestimmten Einbauposition hält und/oder eine Gleitlagerung zum Verschieben oder Aufschieben des Oberteils (13, 113) bezüglich des Unterteils (11, 111) in Verlegerichtung (a) aufweist, wobei insbesondere die Gleitlagerung einen Verschiebestopp aufweist, an dem das Oberteil (13, 113) relativ zum Unterteil (11, 111) festgelegt ist.

5. Kabelkanalabschnitt (3, 103) nach einem der vorstehenden Ansprüche, bei dem das Kanalgehäuse (9, 109) eine Aufbautiefe aufweist, die größer oder gleich der des anschließenden Kabelkanals (7, 107) ist, und/oder einen in Verlegerichtung (a) im Wesentlichen gleichbleibenden Kanalquerschnitt aufweist, der insbesondere rechteckig, dreieckig, halbrund, insbesondere halbzylindrisch, ist, wobei an dem Kabelkanalabschnitt (3, 103) ein Kabelkanal (7, 107) anschließt und ein Übergang zwischen dem Kabelkanal (7, 107) und dem Kabelkanalabschnitt (3, 103) im Wesentlichen kontursprungfrei, insbesondere stufenfrei, vorzugsweise unter Ausbildung eines Kanalwandanstoßübergangs gebildet ist, an dem insbesondere eine Dichtung, wie eine Labyrinth-Dichtung oder Einsatzdichtung, angeordnet ist.

6. Kabelkanalabschnitt (3, 103) nach einem der vorstehenden Ansprüche, bei dem in dem Kanalgehäuse (9, 109) eine Elektronikplatine zum Tragen von Elektronikelementen (37, 137) der Elektronikkomponente (35, 135), wie wenigstens einem Leitungsanschluss, angeordnet ist, wobei vorzugsweise die Elektronikplatine an deren Längsseite mehrere Rastnasen oder -zähne (41, 141) aufweist, um an dem Kanalgehäuse (9, 109) befestigt zu werden.

7. Kabelkanalabschnitt (3, 103) nach einem der vorstehenden Ansprüche, bei dem die Elektronikkomponente (35, 135) einen elektrischen Leitungsanschluss, insbesondere ein elektrisches Leitungsanschlusspaar, und einen POF-Leitungsanschluss, insbesondere ein POF-Leitungsanschlusspaar, an dem ein über einen Kabelkanal (7, 107) ankommenden Duplex POF Leitung anschließbar ist, umfasst.

8. Kabelkanalabschnitt (3, 103) nach einem der vorstehenden Ansprüche, bei dem die Elektronikkomponente (35, 135) wenigstens eine Steckbuchse, insbesondere LAN-und/oder CAT-Steckbuchse, zum Anschließen der Elektronikkomponente (35, 135) an eine externe Leitung (5, 105), die mit einem externen Endgerät koppelbar ist, wobei insbesondere ein Oberteil (13, 113) des Kanalgehäuses (9, 109) wenigstens ein Fenster (33, 133) aufweist, über das ein Steckerzugriff auf die wenigstens eine Steckbuchse zugelassen ist.

9. Kabelkanalabschnitt (3, 103) nach einem der vorstehenden Ansprüche, bei dem die Elektronikkomponente (35, 135) eine WLAN-Antenne aufweist, die in dem Kanalgehäuse (9, 109) untergebracht ist und/oder an einer dem Unterteil (11, 111) zugewandte Seite einer Elektronikplatine positioniert ist.

10. Kabelkanal (7, 107), insbesondere für die vierte und/oder fünfte Netzebene, mit einem nach einem der vorstehenden Ansprüche ausgebildeten Kabelkanalabschnitt (3, 103).

11. Kabelkanalsystem (1, 101), insbesondere für die vierte und/oder fünfte Netzebene, mit einem insbesondere nach Anspruch 10 ausgeführten Kabelkanal (7, 107), der an einer Wand, Boden und/oder Decke eines Gebäudes montiert ist, wobei insbesondere ein nach einem der Ansprüche 1 bis 9 ausgebildeter Kabelkanalabschnitt (3, 103) in einer Höhe relativ zur Bodenfläche von 170 cm bis 210 cm, vorzugsweise 180 cm bis 200 cm, angeordnet ist.
